# EUROPÄISCHE PATENTSCHRIFT

(11) **EP 2 942 139 B1**
(45) Veröffentlichungstag und Bekanntmachung des Hinweises auf die Patenterteilung: **27.03.2019**
(21) Anmeldenummer: 15165483.7
(22) Anmeldetag: 28.04.2015
(51) Int. Cl.: B23D 59/00

(54) **SÄGEMASCHINE UND VERFAHREN ZUM STEUERN EINER SÄGEMASCHINE**
SAWING MACHINE AND METHOD FOR CONTROLLING A SAWING MACHINE
SCIE MÉCANIQUE ET PROCÉDÉ DE COMMANDE D'UNE SCIE MÉCANIQUE

(30) Priorität: 07.05.2014 DE 102014208584
(43) Veröffentlichungstag der Anmeldung: 11.11.2015
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Oberle, Markus, 77876 Kappelrodeck (DE)
(74) Vertreter: Lemcke, Brommer & Partner Patentanwälte Partnerschaft mbB

(56) Entgegenhaltungen:
- EP-A1- 2 476 531
- EP-A2- 1 988 438
- DE-A1- 3 103 243
- DE-A1- 10 043 012
- DE-A1- 19 622 374

## Beschreibung

Die Erfindung betrifft ein Verfahren zum Steuern einer Sägemaschine nach dem Oberbegriff des Anspruchs 1 sowie eine Sägemaschine nach dem Oberbegriff des Anspruchs 10. Eine solche Sägemaschine und ein solches Verfahren sind aus der DE19622374 A1 bekannt und die Sägemaschine, die auch beim vorliegenden Verfahren verwendet wird, umfasst ein Sägewerkzeug, das von einem elektrischen Sägewerkzeugantrieb mit einem Frequenzumrichter angetrieben wird. Ferner ist eine Sägevorschubeinrichtung vorhanden, die das Sägewerkzeug relativ zu einem zu sägenden Werkstück mittels eines elektrischen Vorschubantriebs mit einer variablen Vorschubgeschwindigkeit bewegt. Die Sägemaschine umfasst schließlich auch eine Maschinensteuerung.

Sägemaschinen der vorliegenden Art sind üblicherweise als Bandsägemaschinen oder als Kreissägemaschinen, vereinzelt auch als Bügelsägemaschinen ausgebildet. Das Hauptanwendungsgebiet der vorliegenden Erfindung ist das Schneiden bzw. Sägen von Werkstücken aus Metall.

Je nach Art der Sägemaschine wird das angetriebene Sägewerkzeug, also in der Regel ein Sägeband oder ein Kreissägeblatt, relativ zum Werkstück linear oder um eine Schwenkachse bewegt. Die Werkstücke sind vergleichsweise schwer und werden üblicherweise mittels Fördereinrichtungen auf einen Sägetisch gelegt und dort für den Sägevorgang eingespannt.

Hierbei können Werkstücke mit unterschiedlichen Querschnitten gesägt werden, im Wesentlichen lediglich limitiert durch den maximalen Werkstückquerschnitt, den eine bestimmte Sägemaschine aufgrund ihrer geometrischen Vorgaben zulässt. Des Weiteren können die Werkstücke unterschiedliche Querschnittsformen bzw. Profile aufweisen, beispielsweise werden oft quaderförmige und zylindrische Stangen, sowie beispielsweise T-Profile und dergleichen auf ein und derselben Sägemaschine verarbeitet.

Ein Sägevorgang beginnt mit der Positionierung des Werkstücks in einer Schneidposition, in der die Stelle des Werkstücks, an der dieses abgesägt werden soll, in einer Schnittebene liegt, die durch die Sägevorschubbewegung des Sägewerkzeugs definiert wird. Das Sägewerkzeug muss dann zunächst mit einer Leerlaufvorschubgeschwindigkeit an das Werkstück herangeführt werden, denn da Werkstücke mit unterschiedlichsten Querschnitten gesägt werden können, muss das Sägewerkzeug sicherheitshalber ganz aus dem maximal möglichen Arbeitsquerschnitt der Sägemaschine herausgenommen sein. Der eigentliche Schneidvorgang, also die Vorschubbewegung des Sägewerkzeugs in spanabhebendem Eingriff des Sägewerkzeugs im Werkstück, erfolgt dann mit einer von den Materialeigenschaften abhängenden Arbeitsvorschubgeschwindigkeit, die bei Werkstücken aus Metall üblicherweise in der Größenordnung von Millimetern pro Sekunde liegt und durch die maximale Zerspanungsleistung des Sägewerkzeugs limitiert ist.

Um die Arbeitsleistung einer Sägemaschine der vorliegenden Art zu erhöhen, ist man bestrebt, die für einen Sägevorgang benötigte Zeit zu verringern. Dies kann durch Erhöhen der Leerlaufvorschubgeschwindigkeit des Sägewerkzeugs und/oder durch Erhöhen der Arbeitsvorschubgeschwindigkeit des Sägewerkzeugs im Material erfolgen.

Zum Erhöhen der Leerlaufvorschubgeschwindigkeit ist es bekannt, die geometrischen Daten des zu sägenden Werkstücks durch Sensoren zu ermitteln und das Sägewerkzeug kurz vor einem Eingriff in das Werkstück abzubremsen. Hierdurch wird verhindert, dass das Sägewerkzeug beschädigt wird, wenn es mit einer zu hohen Leerlaufvorschubgeschwindigkeit auf das Werkstück auftrifft. Andere Lösungsansätze gehen bei einer Bandsägemaschine von einer Überwachung des Sägebands aus und messen beispielsweide den Schneidwiderstand am Sägeband, um das Sägewerkzeug abzubremsen, sobald das Sägeband in Kontakt mit dem Werkstück kommt und entsprechenden Widerstand erfährt.

Weiteres Einsparpotential bei der für einen Sägevorgang benötigten Zeit ergibt sich, wenn die Arbeitsvorschubgeschwindigkeit erhöht werden kann. Dies ist auch bei einer vorgegebenen maximalen Zerspanungsleistung der Sägemaschine möglich, und zwar dann, wenn Werkstücke mit profilierten Querschnitten, etwa einem Kreis oder einem U- oder T-Profil, gesägt werden sollen. Denn bei solchen Querschnitten bzw. Profilen kann die Arbeitsvorschubgeschwindigkeit variiert werden, um die benötigte Zeit für den eigentlichen Schneidvorgang zu reduzieren: Beispielsweise bei einem Rundmaterial, also einem zylinderförmigen Werkstück, das in der Schnittebene die Form eines Kreises aufweist, sind zu Beginn des Schneidvorgangs nur wenige Zähne jeweils gleichzeitig im Eingriff mit dem Material. Etwa zur Hälfte des Schneidvorgangs läuft das Sägewerkzeug, insbesondere ein Sägeband, entlang des Durchmessers der Kreisscheibe, hier sind also maximal viele Sägezähne gleichzeitig im Eingriff mit dem Material. Gegen Ende des Schneidvorgangs nimmt die Breite des gesägten Materials wiederum ab, so dass hier wiederum weniger Zähne gleichzeitig im Eingriff mit dem Material stehen. Je weniger Zähne gleichzeitig im Eingriff mit dem Material stehen, um so höher kann die Arbeitsvorschubgeschwindigkeit bei gegebener Zerspanungsleistung gewählt werden.

Die vorliegende Erfindung befasst sich mit dem Optimieren der Arbeitsvorschubgeschwindigkeit beim eigentlichen Schneidvorgang.

Es ist hierfür bekannt, zu Beginn eines Sägevorgangs ein Sägeablaufprogramm zu wählen, das dem Querschnittstyp des Werkstücks angepasst ist, beispielsweise die Querschnittstypen Rundmaterial, Vierkantrohr und dergleichen mehr. Da es sich hierbei um eine typisierende Vorauswahl handelt, müssen insbesondere dann, wenn in Bereichen des Werkstücks gesägt wird, in denen weniger Zähne im Eingriff mit dem Material erwartet werden, als im Fall der maximalen Breite des Werkstücks, also in den Bereichen, in denen mit einer erhöhten Arbeitsvorschubgeschwindigkeit gesägt wird, relativ hohe Sicherheitsabschläge berücksichtigt werden, um das Sägewerkzeug nicht durch eine etwa zu hohe Arbeitsvorschubgeschwindigkeit zu gefährden. Im Beispiel eines Rundmaterials sind dies der Beginn und das Ende des Schneidvorgangs; im Beispiel eines Vierkantrohrs befindet sich der Bereich mit der erhöhten Arbeitsvorschubgeschwindigkeit hingegen zwischen dem Beginn und dem Ende des Schneidvorgangs. Beim Variieren der Arbeitsvorschubgeschwindigkeit gibt es also noch deutliches Optimierungspotential.

Im Stand der Technik gibt es zur Optimierung variierender Arbeitsvorschubgeschwindigkeiten bereits verschiedene Ansätze: In der DE 100 43 012 A1 wird die momentane Belastung eines Sägebands einer Bandsägemaschine mittels eines Kraftmesssensors am Sägebandrücken detektiert. Die Arbeitsvorschubgeschwindigkeit wird dann abhängig von der momentanen Belastung des Sägebandes geregelt. Eine ähnliche Regelung wird in der DE 31 03 243 A1 vorgeschlagen: Dort wird die momentane Durchbiegung des Sägebands im Schnittbereich mittels Sensoren detektiert und daraus eine Regelgröße für die Arbeitsvorschubgeschwindigkeit abgeleitet. In der US 6,682,062 B1 wird während des Schneidvorgangs der Verlauf des Sägebands oder des Sägeblatts gemessen und als Messgröße für die momentane Belastung des Sägewerkzeugs verwendet. Dies ermöglicht wiederum die Regelung der Arbeitsvorschubgeschwindigkeit.

Diesen Lösungsansätzen aus dem Stand der Technik ist gemeinsam, dass Sensoren zur Messung einer Regelgröße vorhanden sein müssen. In einer Sägemaschine der vorliegenden Art herrschen allerdings raue Bedingungen im Schnittbereich bzw. im Bereich des Sägetischs, so dass der Einsatz von Sensoren immer problematisch und oft nicht störungsfrei möglich ist.

Aus der DE-A-196 22 374 ist eine Sägemaschine und ein Verfahren zum Betreiben einer solchen bekannt, bei der die Arbeitsvorschubgeschwindigkeit eines Sägeblatts wiederum abhängig von dessen momentanen Belastung geregelt wird. Hierfür wird eine zum Drehmoment eines drehzahlgeregelten Antriebsmotors für das Sägewerkzeug proportionale Größe direkt aus der Stromaufnahme des Motors ermittelt, so dass sich Sensoren erübrigen. Auf Grundlage der ermittelten Größe wird die Vorschubeinrichtung der Sägemaschine so gesteuert, dass der Antriebsmotor des Sägewerkzeugs weitgehend mit konstantem Drehmoment läuft, indem die Arbeitsvorschubgeschwindigkeit mit errechneten Korrekturwerten entsprechend variiert wird. Ein Sollwert muss für die Regelung jedoch vorgegeben werden.

Der vorliegenden Erfindung liegt die Aufgabe zugrunde, ein Verfahren und eine Sägemaschine der eingangs genannten Art vorzuschlagen, bei dem bzw. bei der die Arbeitsvorschubgeschwindigkeit beim eigentlichen Schneidvorgang optimiert wird, ohne hierzu Sensoren im Arbeitsbereich der Sägemaschine verwenden zu müssen.

Die vorliegende Erfindung löst diese Aufgabe durch ein Verfahren mit den Merkmalen des Anspruchs 1 und durch eine Sägemaschine mit den Merkmalen des Anspruchs 10. Bevorzugte Weiterbildungen des erfindungsgemäßen Verfahrens finden sich in den Ansprüchen 2 bis 9; vorteilhafte Ausgestaltungen der erfindungsgemäßen Sägemaschine sind in den Ansprüchen 11 bis 15 niedergelegt.

Gemäß der vorliegenden Erfindung wird eine Sägemaschine, die, wie an sich bekannt, ein Sägewerkzeug, das von einem elektrischen Sägewerkzeugantrieb mit einem Frequenzumrichter angetrieben wird, und eine Sägevorschubeinrichtung zum Bewegen des angetriebenen Sägewerkzeugs relativ zu einem zu sägenden Werkstück mit einer variablen Vorschubgeschwindigkeit mittels eines elektrischen Vorschubantriebs umfasst, erfindungsgemäß derart gesteuert, dass, für einen ersten Schnitt in einem Werkstück, eine für die Werkstückgeometrie, das Werkstückmaterial und das Sägewerkzeug spezifische, konstante oder variierende Arbeitsvorschubgeschwindigkeit vorab festgelegt wird und dann, während des ersten Schnitts, am Frequenzumrichter des elektrischen Sägewerkzeugantriebs ein momentaner Wert einer physikalischen Größe ermittelt wird, der mit dem vom Sägewerkzeugantrieb auf das Sägewerkzeug übertragenen Drehmoment zusammenhängt. Dieser Wert wird als momentaner Drehmomentwert an eine Maschinensteuerung übermittelt und dieser momentane Drehmomentwert wird dort laufend ausgewertet. Hierbei wird ein maximaler Drehmomentwert des ersten Schnitts ermittelt und auf dessen Basis ein Maximalwert für den Drehmomentwert festgelegt. Für alle folgende Schnitte in demselben Werkstück wird die Arbeitsvorschubgeschwindigkeit des Sägewerkzeugs dann unter Verwendung des momentanen Drehmomentwerts als Regelgröße (Istwert) so geregelt, dass der momentane Drehmomentwert konstant gehalten wird und möglichst nahe am Maximalwert (Sollwert) liegt.

Für einen ersten Schnitt in einem Werkstück wird also erfindungsgemäß die herkömmliche Verfahrensweise durchgeführt, bei der die Arbeitsvorschubgeschwindigkeit des angetriebenen Sägewerkzeugs anhand von Erfahrungswerten oder einer ab Werk der Sägemaschine mitgegebenen Tabelle mit einem insbesondere konstanten Wert vorgewählt wird und der Schnittvorgang mit dieser Arbeitsvorschubgeschwindigkeit erfolgt. Um die benötigte Zeit für den ersten Schnitt zu verringern, kann auch, wie an sich bekannt, eine variierende Arbeitsvorschubgeschwindigkeit vorab festgelegt werden, die aufgrund typisierender Querschnittsformen gewählt wird, wobei beispielsweise bei einem Rundmaterial die vorgewählte Arbeitsvorschubgeschwindigkeit zu Beginn und gegen Ende des Schneidvorgangs erhöht wird.

Die Arbeitsvorschubgeschwindigkeit, die erfindungsgemäß für den ersten Schnitt vorab festgelegt wird, wird für die Werkstückgeometrie, das Werkstückmaterial und das Sägeband spezifisch gewählt, d.h. es fließen die Zerspanungsleistung des Sägewerkzeugs in einem bestimmten Werkstückmaterial sowie beispielsweise die maximale Breite des Werkstücks als Werkstücksgeometrie in die Auswahl ein. Die maximale Breite des Werkstücks kann von der Maschinensteuerung automatisch anhand des Abstands zwischen zwei Spannbacken der Sägemaschine ermittelt werden, die das Werkstück für den Sägevorgang einspannen. Wie erwähnt, kann zusätzlich zur maximalen Breite des Werkstücks auch dessen grundsätzliche Form für die Auswahl einer insbesondere variierenden spezifischen Arbeitsvorschubgeschwindigkeit verwendet werden.

Während dieses herkömmlich durchgeführten ersten Schnitts im Werkstück wird am ersten Frequenzumrichter des Sägewerkzeugantriebs laufend ein momentaner Wert einer physikalischen Größe ermittelt, der mit dem vom Sägewerkzeugantrieb auf das Sägewerkzeug übertragenen Drehmoment zusammenhängt. Diese physikalische Größe kann insbesondere ein von dem ersten Frequenzumrichter an einen Motor des elektrischen Sägewerkzeugantriebs abgegebener Wirkstrom sein.

Bei einer herkömmlich vorab festgelegten konstanten oder variierenden Arbeitsvorschubgeschwindigkeit kann diese nur dann optimal oder nahe an der optimalen, weil maximal zulässigen Belastung des Sägewerkzeugs liegen, wenn diejenige Stelle des Werkstücks gesägt wird, in der die maximale Anzahl von Sägezähnen im Eingriff mit dem Material des Werkstücks stehen, in der Regel also die breiteste Stelle des Werkstücks. An den übrigen Stellen des Werkstücks kann die Arbeitsvorschubgeschwindigkeit nur mit erheblichen Sicherheitsabschlägen erhöht werden. Während eines ersten Schnitts, der erfindungsgemäß mit herkömmlich vorgewählter Arbeitsvorschubgeschwindigkeit durchgeführt wird, wird es also ein Maximum der am Frequenzumrichter des Sägewerkzeugantriebs ermittelten physikalischen Größe geben; denn das vom Sägewerkzeugantrieb auf das Sägewerkzeug übertragene Drehmoment wird aufgrund der Sicherheitsabschläge beim Variieren der Arbeitsvorschubgeschwindigkeit dann am Größten sein, wenn die maximale Anzahl von Sägezähnen im Eingriff mit dem Material steht. Wenn für den ersten Schnitt eine konstante Arbeitsvorschubgeschwindigkeit gewählt wird, ergibt sich dies auch ohne Sicherheitsabschläge. Dieses Maximum wird gleichzeitig zu einem Zeitpunkt des Schneidvorgangs ermittelt, in dem die Arbeitsvorschubgeschwindigkeit im Wesentlichen optimal ist, da bei dieser das auf das Sägewerkzeug übertragene Drehmoment so groß wie möglich ist, ohne das Sägewerkzeug zu beschädigen.

Da der am Frequenzumrichter ermittelte momentane Wert der physikalischen Größe als momentaner Drehmomentwert an die Maschinensteuerung übermittelt wird, kann diese durch laufendes Auswerten der erhaltenen momentanen Drehmomentwerte einen maximalen Drehmomentwert des ersten Schnitts ermitteln und kann diesen als Basis zum Festlegen eines Maximalwerts für den Drehmomentwert verwenden. Hierbei ist es erfindungsgemäß nicht erforderlich, den Absolutwert des vom Sägewerkzeugantrieb an das Sägewerkzeug abgegebenen Drehmoments zu kennen; es ist also auch nicht notwendig, irgendwelche Sensoren oder Messaufnehmer einzusetzen.

Für alle folgenden Schnitte in demselben Werkstück wird schließlich die Arbeitsvorschubgeschwindigkeit erfindungsgemäß unter Verwendung des momentanen Drehmomentwerts als Regelgröße (Istwert) so geregelt, dass der momentane Drehmomentwert konstant gehalten wird und möglichst nahe an dem beim ersten Schnitt ermittelten bzw. nach diesem festgelegten Maximalwert (Sollwert) liegt. Somit wird für alle folgenden Schnitte in demselben Werkstück eine optimale Durchsägeregelung durchgeführt, bei der zum Erhöhen der Arbeitsvorschubgeschwindigkeit bei beispielsweise dünnen Profilabschnitten keine Sicherheitsabschläge mehr vorgenommen werden müssen. Denn anhand der Rückmeldung aus dem Frequenzumrichter, die in Echtzeit Rückschlüsse auf den durch den Kontakt zwischen den Sägewerkzeugzähnen und dem Werkstück erzeugten Widerstand zulassen, kann eine besonders schnelle Reaktion des Vorschubantriebs auf sich am Sägepunkt ändernde Gegebenheiten erreicht werden; insbesondere wird die Arbeitsvorschubgeschwindigkeit in Echtzeit heruntergeregelt, sobald sich der Widerstand im gesägten Werkstück erhöht und als Reaktion darauf der Sägewerkzeugantrieb ein höheres Drehmoment an das Sägewerkzeug abgibt.

Die vorliegende Erfindung ermöglicht also, die Arbeitsvorschubgeschwindigkeit einer Sägemaschine beim eigentlichen Schneidvorgang optimiert zu variieren, auch ohne Sensoren oder Messgeber verwenden zu müssen und auch ohne Absolutwerte für das vom Sägewerkzeugantrieb an das Sägewerkzeug abgegebene Drehmoment zu kennen. Erfahrungswerte oder Vorgabewerte für maximal zulässige Arbeitsvorschubgeschwindigkeiten bei einem gegebenen Werkstückmaterial, einem gegebenen Sägewerkzeug und einer gegebenen Werkstückbreite reichen aus.

Die vorliegende Erfindung ermöglicht weiterhin, in einer bevorzugten Ausgestaltung des erfindungsgemäßen Verfahrens, während des Sägens von mehreren Schnitten in einem Werkstück einen Verschleiß am Sägewerkzeug zu erkennen. Hierzu wird bei jedem Schnitt oder in stichprobenartig ausgewählten Schnitten die auf den Maximalwert für den Drehmomentwert geregelte Arbeitsvorschubgeschwindigkeit mit der mitprotokollierten Arbeitsvorschubgeschwindigkeit in einem oder mehreren vorangegangenen Schnitten verglichen. Da sich der Maximalwert für den Drehmomentwert als Sollwert der Regelung nicht ändert, kann man bei einer Verringerung der sich aus der Regelung ergebenden Arbeitsvorschubgeschwindigkeit auf einen Verschleiß des Sägewerkzeugs schließen und gegebenenfalls auch das Ausmaß des Verschleißes ermitteln.

Weitere Vorteile ergeben sich mit der vorliegenden Erfindung auch dann, wenn für eine bestimmte Kombination der Randbedingungen: Werkstückgeometrie, Werkstückmaterial und Sägewerkzeug bereits Erfahrungswerte oder Vorgabewerte für die bei normalen sonstigen Randbedingungen aus dem Frequenzumrichter auslesbare Drehmomentwerten, insbesondere für den maximalen Drehmomentwert existieren. Denn dann kann der im ersten Schnitt ermittelte maximale Drehmomentwert mit einem aus einer Datenbank oder Liste entnommenen maximalen Drehmomentwert für eine vergleichbare Werkstückgeometrie, ein vergleichbares Werkstückmaterial und ein vergleichbares Sägewerkzeug verglichen werden. Wenn es hierbei Abweichungen gibt, kann man aus den Abweichungen auf Werkstoffinhomogenitäten, Werkstoffabweichungen, von einer Bedienperson falsch gewählte Werkstoffe und/oder einen Verschleiß am Sägewerkzeug schließen.

Mit einer weiteren Weiterbildung der vorliegenden Erfindung können zusätzliche Optimierungen der Arbeitsvorschubgeschwindigkeit erzielt werden: Wenn für den ersten Schnitt eine im Wesentlichen konstante Arbeitsvorschubgeschwindigkeit festgelegt wird, kann aus der laufenden Auswertung des aus dem Frequenzumrichter ausgegebenen momentanen Drehmomentwerts das exakte Profil des gesägten Werkstücks sowie eventuell darin enthaltene Inhomogenitäten, die den Sägewiderstand erhöhen, ermittelt werden. Diese genaue Kenntnis der relativen Sägewiderstände zu jedem Zeitpunkt des Schneidvorgangs im Werkstück ermöglicht vorteilhafterweise, die in der Regel erforderlichen Sicherheitsabschläge beim Festlegen des Maximalwerts für den Drehmomentwert, auf den in den Folgeschnitten geregelt wird, zu optimieren, insbesondere zu verringern, um insgesamt eine höhere Arbeitsvorschubgeschwindigkeit erzielen zu können.

Für den Fall, dass der Zusammenhang zwischen der am ersten Frequenzumrichter ermittelten physikalischen Größe und dem Absolutwert des hierbei auf das Sägewerkzeug übertragenen Drehmoments bekannt ist, ist eine Modifikation der vorliegenden Erfindung vorteilhaft, nach welcher die Maschinensteuerung den momentanen Drehmomentwert laufend mit einem antriebsspezifischen Drehmoment-Schwellenwert vergleicht und die Vorschubgeschwindigkeit des Sägewerkzeugs absenkt, wenn der momentane Drehmomentwert den Drehmoment-Schwellenwert übersteigt. Dies verhindert, dass das Sägewerkzeug etwa doch mit einem zu hohen Drehmoment belastet wird und verhindert insbesondere Beschädigungen des Sägewerkzeugs aufgrund von Fehlbedienungen.

Schließlich ist es vorteilhaft, wenn der am ersten Frequenzumrichter ermittelte Wert der physikalischen Größe mit einem Filterverfahren zum Glätten seines zeitlichen Verlaufs bearbeitet wird; denn da der Wert der physikalischen Größe den Drehmomentverlauf am Sägewerkzeugantrieb in Echtzeit abbildet, können extrem kurzfristige Schwankungen auftreten, die von der Motorsteuerung nicht berücksichtigt werden müssen und gegebenenfalls auch nicht berücksichtigt werden sollten. Eine Glättung stellt eine Art Dämpfungsglied in der Regelstrecke dar.

Ein Ausführungsbeispiel für eine erfindungsgemäße Sägemaschine, die mit einem erfindungsgemäß ausgestalteten Verfahren betrieben wird, wird im folgenden anhand der beigefügten Zeichnungen näher beschrieben und erläutert. Es zeigen:
- Figur 1: eine schematische Darstellung eines Sägetischs einer Bandsägemaschine mit eingelegtem Werkstück (Rundstab) bei Beginn des Schneidvorgangs;
- Figur 2: eine Darstellung wie Figur 1, jedoch während des Schneidvorgangs;
- Figur 3: eine Darstellung wie Figur 1, jedoch mit einem anderen eingelegten Werkstück (C-Profil), zu Beginn des Schneidvorgangs;
- Figur 4: eine Darstellung wie Figur 3, jedoch gegen Ende des Schneidvorgangs;
- Figur 5: ein Diagramm einer Auswertung des am Sägewerkzeugantrieb ermittelten momentanen Drehmomentwerts.

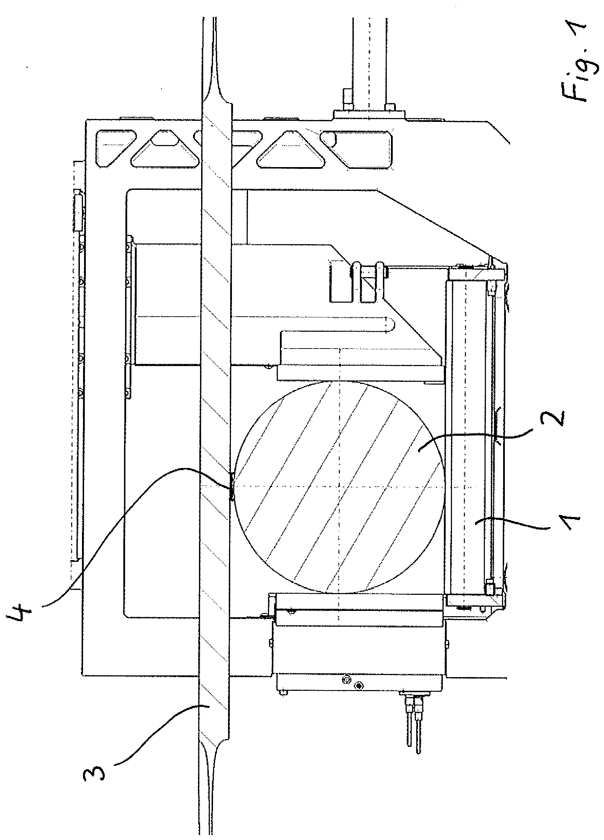

In Figur 1 ist schematisch ein Sägetisch 1 einer Bandsägemaschine dargestellt, auf dem ein Werkstück 2, hier eine zylindrische Stange aufliegt. Oberhalb des Werkstücks läuft ein Sägeband als Sägewerkzeug 3 endlos um zwei (nicht dargestellte) Umlenkrollen eines heb- und senkbaren Sägenoberteils um. Das Sägeband bewegt sich in der gewählten Darstellung in der Zeicheneben von rechts nach links.

Der in Figur 1 dargestellte Zeitpunkt ist der Beginn des eigentlichen Schneidvorgangs: Das Sägeband 3 bewegt sich in einer Vorschubbewegung in einer Schneidebene, die in der gewählten Darstellung mit der Zeicheneben zusammenfällt, nach unten und hat eben Kontakt mit dem Werkstück 2 erhalten. Innerhalb einer Eingriffsstrecke 4 befindet sich das Sägeband 3 in Eingriff mit dem Material des Werkstücks 2 und trennt dieses durch die spanabhebende Wirkung der am unteren Ende des Sägebands 3 angebrachten Sägezähne.

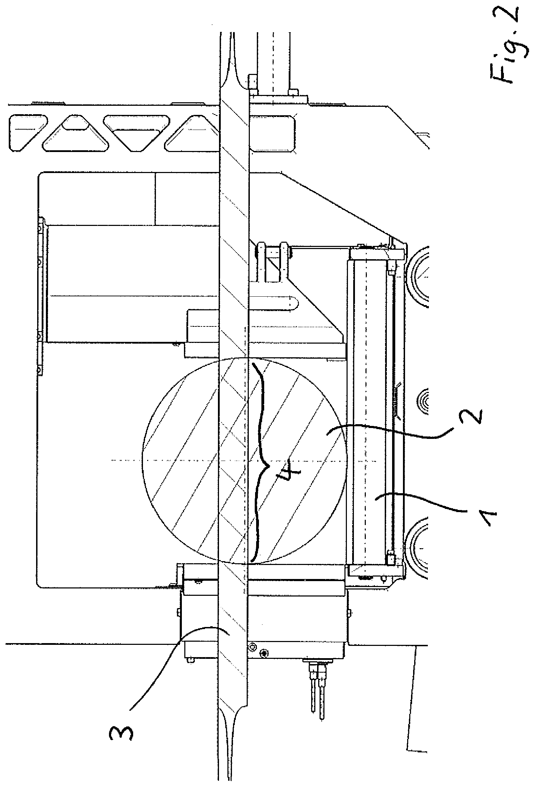

In Figur 2 ist ein späterer Zeitpunkt des Schneidvorgangs dargestellt. Hier befindet sich das Sägeband 3 in etwa der Mitte des Querschnitts des Werkstücks 2, so dass die Eingriffsstrecke 4 hier wesentlich höher ist als zu Beginn des Schneidvorgangs, der in Figur 1 dargestellt ist, Dementsprechend befinden sich in dem in Figur 2 dargestellten Zeitpunkt wesentlich mehr Sägezähne des Sägebands 3 im Eingriff mit dem Material des Werkstücks 2 als zu dem in Figur 1 dargestellten Beginn des Schneidvorgangs, oder auch gegen Ende des Schneidvorgangs (nicht dargestellt). Dementsprechend erfährt das Sägeband 3 in dem in Figur 2 dargestellten Zeitpunkt einen wesentlich höheren Widerstand als in dem in Figur 1 dargestellten Zeitpunkt, so dass bei einer gegebenen Arbeitsvorschubgeschwindigkeit des Sägebands 3 ein dementsprechend höheres Drehmoment vom Sägewerkzeugantrieb an das Sägeband 3 abgegeben werden muss, um das Sägewerkzeug auf Sollgeschwindigkeit zu halten. Umgekehrt kann die Arbeitsvorschubgeschwindigkeit bei einem gegebenen, optimalen Drehmoment, das an das Sägeband 3 abgegeben wird, in dem in Figur 1 dargestellten Zeitpunkt sehr viel höher gewählt werden als in dem in Figur 2 dargestellten Zeitpunkt.

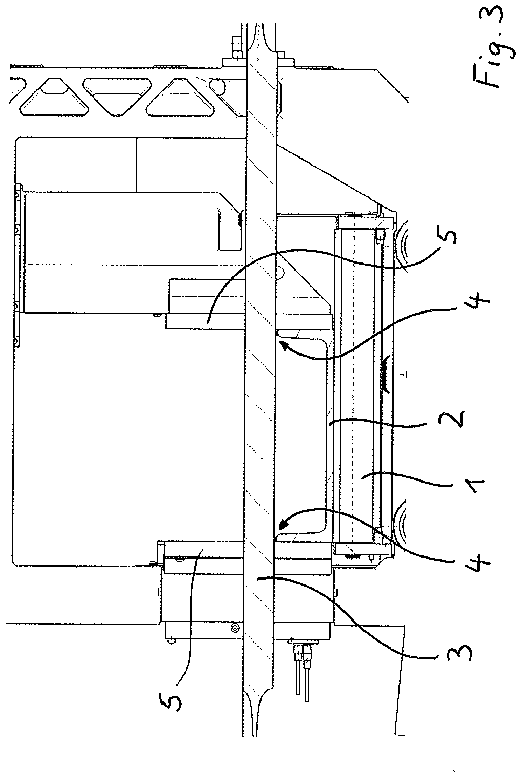

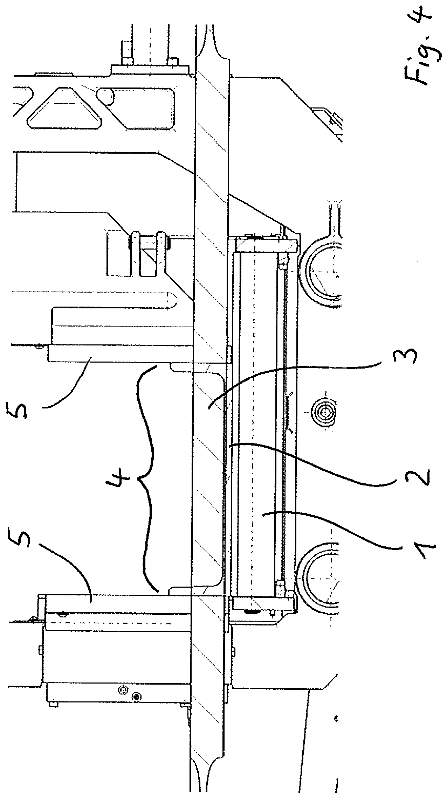

Entsprechende Gegebenheiten sind in den Figuren 3 und 4 dargestellt, die wiederum schematisch den Sägetisch 1 einer Bandsägemaschine zeigen, auf dem ein Werkstück 2' aufliegt. Dieses Werkstück 2' ist diesmal ein C-Profil, das für den Sägevorgang in Spannbacken 5 der Sägemaschine eingespannt ist.

Figur 3 zeigt wiederum den Zeitpunkt zu Beginn des eigentlichen Schneidvorgangs, in dem das Sägeband 3 in Eingriff mit dem Material des Werkstücks 2' gelangt, während Figur 4 wiederum einen Zeitpunkt während des Schneidvorgangs zeigt, in dem die maximale Eingriffsstrecke 4 der gegebenen Werkzeugform gesägt wird und dementsprechend die maximale Anzahl von Sägezähnen gleichzeitig im Eingriff mit dem Material des Werkstücks 2' steht.

Beim vorliegenden C-förmigen Werkstück 2' gibt es besonders viel Optimierungspotential beim Variieren der Arbeitsvorschubgeschwindigkeit des Sägebands 3, da für nahezu den gesamten Sägevorgang lediglich zwei kleine Eingriffsstrecken 4 eines Eingriffs zwischen dem Sägeband 3 und dem Werkstück 2' vorliegen, während erst gegen Ende des Sägevorgangs, wenn das Sägeband 3 in den C-Rücken des profilierten Werkstücks 2' eingreift, ein hoher Widerstand auf das Sägeband 3 einwirkt und die Arbeitsvorschubgeschwindigkeit demgemäß verlangsamt werden muss.

Um das erfindungsgemäße Verfahren durchzuführen, genügt es beispielsweise bei dem in den Figuren 3 und 4 dargestellten Ausführungsbeispiel, zu Beginn des Sägevorgangs das Material des Werkstücks 2' und gegebenenfalls die Art und Dimension des Sägeband 3 in die Maschinensteuerung einzugeben. Aufgrund der Stellung der Spannbacken 5, die das Werkstück 2' für den Sägevorgang einspannen, kennt die Maschinensteuerung die maximale Breite des Werkstücks 2' und kann eine Arbeitsvorschubgeschwindigkeit auswählen, die spezifisch für die Werkstückbreite, das Werkstückmaterial und das Sägewerkzeug als optimal bekannt ist.

Mit dieser ermittelten konstanten Arbeitsvorschubgeschwindigkeit wird der erste Schnitt des Werkstücks 2' konstant durchgeführt. Hierbei wird in dem in Figur 4 dargestellten Zeitpunkt ein Maximum einer physikalischen Größe am Frequenzumrichter des Sägewerkzeugantriebs detektiert werden, da bei der gegebenen Arbeitsvorschubgeschwindigkeit das vom Sägewerkzeugantrieb auf das Sägeband 3 abgegebene Drehmoment an dieser Stelle am größten ist.

Auch ohne das tatsächlich abgegebene Drehmoment oder die tatsächlich auf das Sägeband 3 wirkenden Kräfte in Absolutwerten zu kennen, kann nun für alle darauffolgenden Schnitte eine optimal variierende Arbeitsvorschubgeschwindigkeit gefahren werden, da die Maschinensteuerung die Arbeitsvorschubgeschwindigkeit so regelt, dass vom Sägewerkzeugantrieb laufend ein Drehmoment an das Sägeband 3 abgegeben wird, das einem beim ersten Schnitt ermittelten Maximalwert entspricht. Aufgrund der Echtzeit-Rückmeldung des Drehmomentwerts über den Frequenzumrichter des Sägewerkzeugantriebs kann das Sägeband 3 auch im Übergang von den C-Schenkeln zum C-Rücken des Werkstücks 2' keinen Schaden nehmen, denn die Arbeitsvorschubgeschwindigkeit wird aufgrund der Rückmeldung des Frequenzumrichters außerordentlich schnell heruntergeregelt.

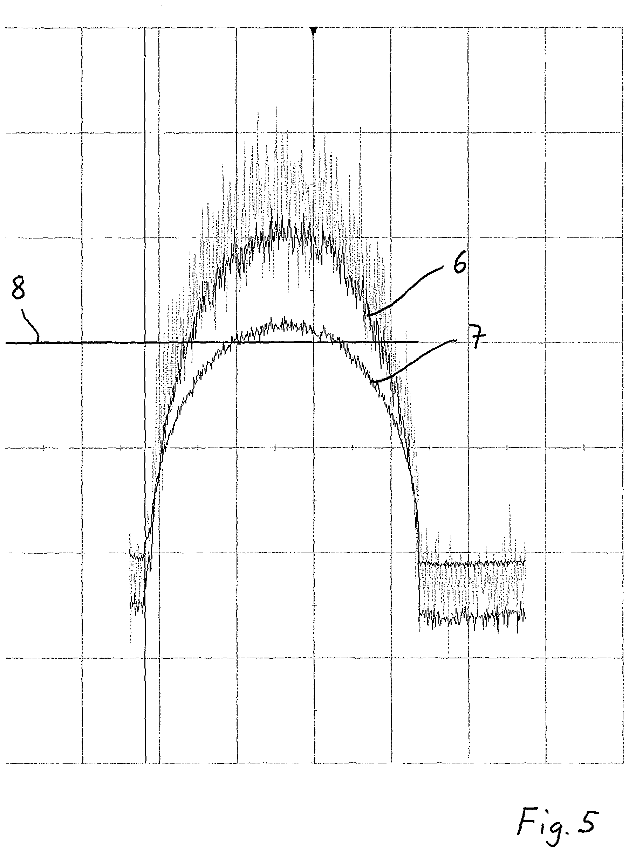

Figur 5 zeigt ein Messdiagramm bei der Auswertung des an die Maschinensteuerung gemeldeten momentanen Drehmomentwerts 6 vor (Bezugszeichen 6) und nach einer Filterung (Bezugszeichen 7). Es handelt sich um die Auswertung eines ersten Sägeschnitts in der in den Figuren 1 und 2 dargestellten Konfiguration, also eines Sägeschnitts in einem zylindrischen Werkstück 2 mit konstanter Arbeitsvorschubgeschwindigkeit. Deutlich erkennbar ist, dass der Drehmomentwert 6 bzw. der gefilterte Drehmomentwert 7 dann ein Maximum erreicht, wenn in etwa die Mitte des Werkstücks 2 gesägt wird, wie dies Figur 2 darstellt.

Die Maschinensteuerung legt ausgehend von diesem Maximum, unter Berücksichtigung eines geringen Sicherheitsabschlags, einen Maximalwert 8 fest, mit dem dann die Arbeitsvorschubgeschwindigkeit für alle nachfolgenden Schnitte in demselben Material geregelt wird.

## Patentansprüche

1. Verfahren zum Steuern einer Sägemaschine mit einem Sägewerkzeug (3) und mit einer Sägevorschubeinrichtung, wobei das Sägewerkzeug (3) von einem elektrischen Sägewerkzeugantrieb mit einem Frequenzumrichter angetrieben wird, und wobei das angetriebene Sägewerkzeug (3) von der Sägevorschubeinrichtung mittels eines elektrischen Vorschubantriebs relativ zu einem zu sägenden Werkstück (2) mit einer variablen Vorschubgeschwindigkeit bewegt wird,
**dadurch gekennzeichnet,**
**dass**, für einen ersten Schnitt in einem Werkstück (2), eine für die Werkstückgeometrie, das Werkstückmaterial und das Sägewerkzeug (3) spezifische, konstante oder variierende Arbeitsvorschubgeschwindigkeit vorab festgelegt wird,
**dass** während des ersten Schnitts am Frequenzumrichter ein momentaner Wert einer physikalischen Größe ermittelt wird, der mit dem vom Sägewerkzeugantrieb auf das Sägewerkzeug (3) übertragenen Drehmoment zusammenhängt, und dieser Wert als momentaner Drehmomentwert (6) laufend ausgewertet, hierbei ein maximaler Drehmomentwert des ersten Schnitts ermittelt und auf dessen Basis ein Maximalwert (8) für den Drehmomentwert festgelegt wird,
und **dass** für alle folgenden Schnitte in demselben Werkstück (2) die Arbeitsvorschubgeschwindigkeit unter Verwendung des momentanen Drehmomentwerts (6) als Regelgröße, nämlich Istwert, so geregelt wird, dass der momentane Drehmomentwert (6) konstant gehalten wird und möglichst nahe am Maximalwert, nämlich dem Sollwert, (8) liegt.

2. Verfahren nach Anspruch 1,
**dadurch gekennzeichnet,**
**dass**, für den ersten Schnitt im Werkstück (2), als Werkstückgeometrie die maximale Breite des Werkstücks (2) zum Vorab-Festlegen einer spezifischen Arbeitsvorschubgeschwindigkeit verwendet wird, wobei die maximale Breite des Werkstücks (2) auf Basis des Abstands zwischen zwei Spannbacken (5) der Sägemaschine ermittelt wird, die das Werkstück (2) für den Sägevorgang einspannen.

3. Verfahren nach einem der Ansprüche 1 oder 2,
**dadurch gekennzeichnet,**
**dass** neben einer maximalen Breite des Werkstücks (2) auch dessen grundsätzliche Form zum Vorab-Festlegen einer variierenden spezifischen Vorschubgeschwindigkeit verwendet wird.

4. Verfahren nach mindestens einem der Ansprüche 1 bis 3,
**dadurch gekennzeichnet,**
**dass** der momentane Drehmomentwert (6) laufend mit einem antriebsspezifischen Drehmoment-Schwellenwert verglichen und die Arbeitsvorschubgeschwindigkeit des Sägewerkzeugs (3) abgesenkt wird, wenn der momentane Drehmomentwert (6) den Drehmoment-Schwellenwert übersteigt.

5. Verfahren nach mindestens einem der Ansprüche 1 bis 4,
**dadurch gekennzeichnet,**
**dass** als physikalische Größe ein vom Frequenzumrichter an einen Motor des elektrischen Sägewerkzeugantriebs abgegebener Wirkstrom verwendet wird.

6. Verfahren nach mindestens einem der Ansprüche 1 bis 5,
**dadurch gekennzeichnet,**
**dass** der am Frequenzumrichter ermittelte Wert der physikalischen Größe mit einem Filterverfahren zum Glätten seines zeitlichen Verlaufs bearbeitet wird.

7. Verfahren nach mindestens einem der Ansprüche 1 bis 6,
**dadurch gekennzeichnet,**
**dass** bei jedem Schnitt oder in stichprobenartig ausgewählten Schnitten die auf den Maximalwert (8) für den Drehmomentwert geregelte Arbeitsvorschubgeschwindigkeit mit der Arbeitsvorschubgeschwindigkeit in einem oder mehreren vorangegangenen Schnitten verglichen wird, um einen Verschleiß am Sägewerkzeug (3) zu erkennen.

8. Verfahren nach mindestens einem der Ansprüche 1 bis 7,
**dadurch gekennzeichnet,**
**dass** der im ersten Schnitt ermittelte maximale Drehmomentwert mit einem aus einer Datenbank oder Liste entnommenen maximalen Drehmomentwert für eine vergleichbare Werkstückgeometrie, ein vergleichbares Werkstückmaterial und ein vergleichbares Sägewerkzeug (3) verglichen wird, um Werkstoffinhomogenitäten, Werkstoffabweichungen und/oder Verschleiß am Sägewerkzeug (3) zu erkennen.

9. Verfahren nach mindestens einem der Ansprüche 1 bis 8
**dadurch gekennzeichnet,**
**dass** für den ersten Schnitt eine im Wesentlichen konstanten Arbeitsvorschubgeschwindigkeit festgelegt wird, und dass aus der laufenden Auswertung des sich daraus ergebenden momentanen Drehmomentwerts (6) das Profil des gesägten Werkstücks (2) ermittelt wird, um Sicherheitsabschläge insbesondere beim Festlegen des Maximalwerts (8) für den Drehmomentwert optimieren zu können.

10. Sägemaschine mit einem Sägewerkzeug (3), das von einem elektrischen Sägewerkzeugantrieb mit einem Frequenzumrichter angetrieben wird, und mit einer Sägevorschubeinrichtung zum Bewegen des angetriebenen Sägewerkzeugs (3) relativ zu einem zu sägenden Werkstück (2) mit einer variablen Vorschubgeschwindigkeit mittels eines elektrischen Vorschubantriebs, sowie mit einer Maschinensteuerung,
**dadurch gekennzeichnet,**
**dass** die Maschinensteuerung so ausgestaltet ist, dass sie, für einen ersten Schnitt in einem Werkstück (2), eine für die Werkstückgeometrie, das Werkstückmaterial und das Sägewerkzeug (3) spezifische, konstante oder variierende, vorab festgelegte Arbeitsvorschubgeschwindigkeit verwendet, wobei der Frequenzumrichter so ausgestaltet ist, dass er während des ersten Schnitts einen momentanen Wert einer physikalischen Größe, der mit dem vom Sägewerkzeugantrieb auf das Sägewerkzeug (3) übertragenen Drehmoment zusammenhängt, als momentanen Drehmomentwert (6) an die Maschinensteuerung übermittelt,
während die Maschinensteuerung so ausgestaltet ist, dass sie den vom Frequenzumrichter erhaltenen momentanen Drehmomentwert (6) laufend auswertet, hierbei einen maximalen Drehmomentwert des ersten Schnitts ermittelt und auf dessen Basis einen Maximalwert (8) für den Drehmomentwert festlegt,
und **dass** sie für alle folgenden Schnitte in demselben Werkstück (2) die Arbeitsvorschubgeschwindigkeit unter Verwendung des momentanen Drehmomentwerts (6) als Regelgröße, nämlich Istwert, so regelt, dass der momentante Drehmomentwert (6) konstant gehalten wird und möglichst nahe am Maximalwert, nämlich dem Sollwert, (8) liegt.

11. Sägemaschine nach Anspruch 10,
**dadurch gekennzeichnet,**
**dass** die Maschinensteuerung so ausgestaltet ist, dass sie, für den ersten Schnitt im Werkstück (2), als Werkstückgeometrie die maximale Breite des Werkstücks (2) zum Vorab-Festlegen einer spezifischen Arbeitsvorschubgeschwindigkeit verwendet, wobei sie die maximale Breite des Werkstücks auf Basis des Abstands zwischen zwei Spannbacken (5) der Sägemaschine ermittelt, die das Werkstück (2) für den Sägevorgang einspannen.

12. Sägemaschine nach einem der Ansprüche 10 oder 11,
**dadurch gekennzeichnet,**
**dass** die Maschinensteuerung so ausgestaltet ist, dass sie neben einer maximalen Breite des Werkstücks (2) auch dessen grundsätzliche Form zum Vorab-Festlegen einer variierenden spezifischen Vorschubgeschwindigkeit verwendet.

13. Sägemaschine nach mindestens einem der Ansprüche 10 bis 12,
**dadurch gekennzeichnet,**
**dass** die Maschinensteuerung so ausgestaltet ist, dass sie den momentanen Drehmomentwert (6) laufend mit einem antriebsspezifischen Drehmoment-Schwellenwert vergleicht und die Arbeitsvorschubgeschwindigkeit des Sägewerkzeugs (3) absenkt, wenn der momentane Drehmomentwert (6) den Drehmoment-Schwellenwert übersteigt.

14. Sägemaschine nach mindestens einem der Ansprüche 10 bis 13,
**dadurch gekennzeichnet,**
**dass** die physikalische Größe ein vom Frequenzumrichter an einen Motor des elektrischen Sägewerkzeugantriebs abgegebener Wirkstrom ist.

15. Sägemaschine nach mindestens einem der Ansprüche 10 bis 14,
**dadurch gekennzeichnet,**
**dass** der am Frequenzumrichter ermittelte Wert der physikalischen Größe mit einem Filterverfahren zum Glätten seines zeitlichen Verlaufs bearbeitet ist.

## Claims

1. Method for controlling a sawing machine having a sawing tool (3) and having a saw feed device, wherein the sawing tool (3) is driven by an electric sawing tool drive having a frequency converter, and wherein the driven sawing tool (3) is moved by the saw feed device relative to a workpiece (2) to be sawn at a variable feed rate by means of an electric feed drive,
**characterised in that**,
for a first cut in a workpiece (2), a constant or varying working feed rate that is specific to the workpiece geometry, to the workpiece material and to the sawing tool (3) is pre-defined,
during the first cut an instantaneous value of a physical variable is determined at the frequency converter, which value is associated with the torque transmitted from the sawing tool drive to the sawing tool (3), and that value is continuously analysed as an instantaneous torque value (6), during which analysis a maximum torque value of the first cut is determined and, on the basis thereof, a maximum value (8) for the torque value is defined,
and for all subsequent cuts in the same workpiece (2) the working feed rate is regulated using the instantaneous torque value (6) as controlled variable, that is to say as actual value, so that the instantaneous torque value (6) is kept constant and is as close as possible to the maximum value, that is to say to the desired value, (8).

2. Method according to claim 1,
**characterised in that**,
for the first cut in the workpiece (2), the maximum width of the workpiece (2) is used as workpiece geometry for pre-defining a specific working feed rate, the maximum width of the workpiece (2) being determined on the basis of the distance between two clamping jaws (5) of the sawing machine which clamp the workpiece (2) for the sawing operation.

3. Method according to either one of claims 1 and 2,
**characterised in that**,
in addition to a maximum width of the workpiece (2), the basic shape thereof is also used for pre-defining a varying specific feed rate.

4. Method according to at least one of claims 1 to 3,
**characterised in that**
the instantaneous torque value (6) is continuously compared with a drive-specific torque threshold value, and the working feed rate of the sawing tool (3) is reduced if the instantaneous torque value (6) exceeds the torque threshold value.

5. Method according to at least one of claims 1 to 4,
**characterised in that**
an active current supplied to a motor of the electric sawing tool drive by the frequency converter is used as physical variable.

6. Method according to at least one of claims 1 to 5,
**characterised in that**
the value of the physical variable determined at the frequency converter is processed using a filtering process to smooth its variation over time.

7. Method according to at least one of claims 1 to 6,
**characterised in that**
in the case of each cut or in randomly selected cuts, the working feed rate regulated to the maximum value (8) for the torque value is compared with the working feed rate in one or more preceding cuts in order to detect wear to the sawing tool (3).

8. Method according to at least one of claims 1 to 7,
**characterised in that**
the maximum torque value determined in the first cut is compared with a maximum torque value, taken from a data bank or list, for a comparable workpiece geometry, for a comparable workpiece material and for a comparable sawing tool (3) in order to detect material inhomogeneities, material deviations and/or wear to the sawing tool (3).

9. Method according to at least one of claims 1 to 8,
**characterised in that**,
for the first cut, a substantially constant working feed rate is defined, and the profile of the sawn workpiece (2) is determined from the continuous analysis of the resulting instantaneous torque value (6) in order to be able to optimise safety margins, especially when defining the maximum value (8) for the torque value.

10. Sawing machine having a sawing tool (3) which is driven by an electric sawing tool drive having a frequency converter, and having a saw feed device for moving the driven sawing tool (3) relative to a workpiece (2) to be sawn at a variable feed rate by means of an electric feed drive, and also having a machine controller,
**characterised in that**
the machine controller is configured so that, for a first cut in a workpiece (2), it uses a constant or varying, pre-defined working feed rate that is specific to the workpiece geometry, to the workpiece material and to the sawing tool (3),
the frequency converter being configured so that during the first cut it transmits an instantaneous value of a physical variable, as instantaneous torque value (6), to the machine controller, which instantaneous value is associated with the torque transmitted from the sawing tool drive to the sawing tool (3),
while the machine controller is configured so that it continuously analyses the instantaneous torque value (6) received from the frequency converter, during which analysis it determines a maximum torque value of the first cut and, on the basis thereof, defines a maximum value (8) for the torque value,
and for all subsequent cuts in the same workpiece (2) it regulates the working feed rate using the instantaneous torque value (6) as controlled variable, that is to say as actual value, so that the instantaneous torque value (6) is kept constant and is as close as possible to the maximum value, that is to say to the desired value, (8).

11. Sawing machine according to claim 10,
**characterised in that**
the machine controller is configured so that, for the first cut in the workpiece (2), it uses the maximum width of the workpiece (2) as workpiece geometry for pre-defining a specific working feed rate, the machine controller determining the maximum width of the workpiece on the basis of the distance between two clamping jaws (5) of the sawing machine which clamp the workpiece (2) for the sawing operation.

12. Sawing machine according to either one of claims 10 and 11,
**characterised in that**
the machine controller is configured so that in addition to a maximum width of the workpiece (2) it also uses the basic shape thereof for pre-defining a varying specific feed rate.

13. Sawing machine according to at least one of claims 10 to 12,
**characterised in that**
the machine controller is configured so that it continuously compares the instantaneous torque value (6) with a drive-specific torque threshold value and reduces the working feed rate of the sawing tool (3) if the instantaneous torque value (6) exceeds the torque threshold value.

14. Sawing machine according to at least one of claims 10 to 13,
**characterised in that**
the physical variable is an active current supplied to a motor of the electric sawing tool drive by the frequency converter.

15. Sawing machine according to at least one of claims 10 to 14,
**characterised in that**
the value of the physical variable determined at the frequency converter is processed using a filtering process to smooth its variation over time.

## Revendications

1. Procédé de commande d'une machine à scier équipée d'un outil de sciage (3) et d'un dispositif de progression du sciage, ledit outil de sciage (3) étant entraîné par un entraînement électrique muni d'un convertisseur de fréquence, et ledit outil de sciage (3) entraîné étant mis en mouvement à une vitesse d'avance variable par ledit dispositif de progression du sciage, par rapport à une pièce (2) à usiner, au moyen d'un entraînement électrique d'avance,
**caractérisé par le fait**
**que**, pour une première découpe dans une pièce (2) à usiner, une vitesse constante ou variable de progression du travail, spécifique de la géométrie de la pièce, du matériau de ladite pièce et de l'outil de sciage (3), est définie au préalable ;
**que**, lors de ladite première découpe, une valeur instantanée d'une grandeur physique est déterminée au niveau dudit convertisseur de fréquence, ladite valeur étant en corrélation avec le couple de rotation transmis à l'outil de sciage (3) par l'entraînement dudit outil de sciage, et cette valeur étant estimée en permanence en tant que valeur instantanée (6) du couple de rotation, une valeur maximale du couple de rotation de ladite première découpe étant alors déterminée, valeur sur la base de laquelle est définie une valeur maximale (8) assignée à la valeur du couple de rotation ;
et **que**, pour toutes les découpes suivantes dans la même pièce (2) à usiner, ladite vitesse de progression du travail est régulée, avec utilisation de la valeur instantanée (6) du couple de rotation en tant que grandeur de régulation, c'est-à-dire en tant que valeur réelle, de façon telle que ladite valeur instantanée (6) du couple de rotation soit maintenue constante et soit la plus proche possible de la valeur maximale, c'est-à-dire de la valeur de consigne (8).

2. Procédé selon la revendication 1,
**caractérisé par le fait**
**que**, pour la première découpe dans la pièce (2) à usiner, la largeur maximale de ladite pièce (2) à usiner est utilisée, en tant que géométrie de ladite pièce, afin de définir préalablement une vitesse spécifique de progression du travail, ladite largeur maximale de ladite pièce (2) à usiner étant déterminée sur la base de la distance comprise entre deux mors d'ablocage (5) de la machine à scier qui enserrent ladite pièce (2) à usiner, en vue de l'opération de sciage.

3. Procédé selon l'une des revendications 1 ou 2,
**caractérisé par le fait**
**que** la configuration de base de la pièce (2) à usiner est également utilisée, outre une largeur maximale de cette dernière, en vue de définir préalablement une vitesse d'avance spécifique variable.

4. Procédé selon au moins l'une des revendications 1 à 3,
**caractérisé par le fait**
**que** la valeur instantanée (6) du couple de rotation est comparée en permanence à une valeur de seuil dudit couple de rotation, spécifique de l'entraînement, et la vitesse de progression du travail de l'outil de sciage (3) est abaissée lorsque ladite valeur instantanée (6) du couple de rotation excède ladite valeur de seuil dudit couple de rotation.

5. Procédé selon au moins l'une des revendications 1 à 4,
**caractérisé par le fait**
**qu'**un courant actif, délivré à un moteur de l'entraînement électrique de l'outil de sciage par le convertisseur de fréquence, est utilisé en tant que grandeur physique.

6. Procédé selon au moins l'une des revendications 1 à 5,
**caractérisé par le fait**
**que** la valeur de la grandeur physique, déterminée au niveau du convertisseur de fréquence, est traitée à l'aide d'un procédé de filtrage en vue de lisser son allure dans le temps.

7. Procédé selon au moins l'une des revendications 1 à 6,
**caractérisé par le fait**
**que**, lors de chaque découpe ou au cours de découpes sélectionnées par échantillonnage, la vitesse de progression du travail, régulée sur la valeur maximale (8) assignée à la valeur du couple de rotation, est comparée à la vitesse de progression du travail au cours d'une ou plusieurs découpe(s) précédente(s), en vue de repérer une usure affectant l'outil de sciage (3).

8. Procédé selon au moins l'une des revendications 1 à 7,
**caractérisé par le fait**
**que** la valeur maximale du couple de rotation, déterminée au cours de la première découpe, est comparée à une valeur maximale dudit couple de rotation, extraite d'une banque de données ou d'une liste et relative à une géométrie comparable de la pièce à usiner, à un matériau comparable de ladite pièce et à un outil de sciage (3) comparable, en vue de repérer des défauts d'homogénéité du matériau, des écarts entre matériaux et/ou une usure affectant ledit outil de sciage (3).

9. Procédé selon au moins l'une des revendications 1 à 8,
**caractérisé par le fait**
**qu'**une vitesse de progression du travail, pour l'essentiel constante, est définie pour la première découpe ; et par le fait que le profil de la pièce (2) sciée est déterminé, sur la base de l'estimation en cours de la valeur instantanée (6) du couple de rotation qui en résulte, de manière à pouvoir optimaliser des marges de sécurité, en particulier lors de la définition de la valeur maximale (8) assignée à la valeur dudit couple de rotation.

10. Machine à scier équipée d'un outil de sciage (3) entraîné par un entraînement électrique doté d'un convertisseur de fréquence ; et d'un dispositif d'avance du sciage destiné à imprimer des mouvements audit outil de sciage (3) entraîné, par rapport à une pièce (2) à scier, à une vitesse d'avance variable, au moyen d'un entraînement électrique d'avance ; ainsi que d'une commande de machine,
**caractérisée par le fait**
**que** la commande de la machine est réalisée de façon telle qu'elle utilise, pour une première découpe dans une pièce (2) à usiner, une vitesse constante ou variable de progression du travail définie au préalable, spécifique de la géométrie de la pièce à usiner, du matériau de ladite pièce et de l'outil de sciage (3), le convertisseur de fréquence étant conçu de telle sorte qu'il transmette à ladite commande de la machine au cours de ladite première découpe, en tant que valeur instantanée (6) du couple de rotation, une valeur instantanée d'une grandeur physique en corrélation avec le couple de rotation transmis à l'outil de sciage (3) par l'entraînement dudit outil de sciage,
ladite commande de la machine étant, par ailleurs, réalisée de telle manière qu'elle estime, en permanence, la valeur instantanée (6) du couple de rotation émanant dudit convertisseur de fréquence, en déterminant alors une valeur maximale du couple de rotation de ladite première découpe et en définissant, sur la base de ladite valeur, une valeur maximale (8) assignée à la valeur dudit couple de rotation,
et **qu'**elle régule ladite vitesse de progression du travail pour toutes les découpes suivantes dans la même pièce (2) à usiner, avec utilisation de la valeur instantanée (6) du couple de rotation en tant que grandeur de régulation, c'est-à-dire en tant que valeur réelle, de façon telle que ladite valeur instantanée (6) du couple de rotation soit maintenue constante et soit la plus proche possible de la valeur maximale, c'est-à-dire de la valeur de consigne (8).

11. Machine à scier selon la revendication 10,
**caractérisée par le fait**
**que** la commande de la machine est réalisée de façon telle qu'elle utilise, pour la première découpe dans la pièce (2) à usiner, la largeur maximale de ladite pièce (2) à usiner, en tant que géométrie de ladite pièce, afin de définir préalablement une vitesse spécifique de progression du travail, en déterminant alors la largeur maximale de ladite pièce à usiner sur la base de la distance comprise entre deux mors d'ablocage (5) de la machine à scier qui enserrent ladite pièce (2) à usiner, en vue de l'opération de sciage.

12. Machine à scier selon l'une des revendications 10 ou 11,
**caractérisée par le fait**
**que** la commande de la machine est réalisée de façon telle qu'elle utilise également la configuration de base de la pièce (2) à usiner, outre une largeur maximale de cette dernière, en vue de définir préalablement une vitesse d'avance spécifique variable.

13. Machine à scier selon au moins l'une des revendications 10 à 12,
**caractérisée par le fait**
**que** la commande de la machine est réalisée de façon telle qu'elle compare en permanence la valeur instantanée (6) du couple de rotation à une valeur de seuil dudit couple de rotation, spécifique de l'entraînement, et qu'elle abaisse la vitesse de progression du travail de l'outil de sciage (3) lorsque ladite valeur instantanée (6) du couple de rotation excède ladite valeur de seuil dudit couple de rotation.

14. Machine à scier selon au moins l'une des revendications 10 à 13,
**caractérisée par le fait**
**que** la grandeur physique est un courant actif délivré, par le convertisseur de fréquence, à un moteur de l'entraînement électrique de l'outil de sciage.

15. Machine à scier selon au moins l'une des revendications 10 à 14,
**caractérisée par le fait**
**que** la valeur de la grandeur physique, déterminée au niveau du convertisseur de fréquence, est traitée à l'aide d'un procédé de filtrage en vue de lisser son allure dans le temps.
